# EUROPEAN PATENT APPLICATION

(11) **EP 1 744 238 A1**
(43) Date of publication of application: **17.01.2007**
(21) Application number: 05254447.5
(22) Date of filing: 16.07.2005
(51) Int. Cl.: G06F 3/033

(54) **Method for selecting multiple electronic files**

(71) Applicant: Tatung Co., Ltd., Taipei City 104, R.O.C. (TW)
(72) Inventor: Wang, Yueh-Chi, Taipei City 104 (TW); Chen, Yi-Ru, Taipei City 104 (TW); Hsu, Guang-Min, Taipei City 104 (TW); Chen, Shih-Chieh, Taipei City 104 (TW)
(74) Representative: Tranter, Andrew David

(57) **Abstract**

The present invention relates to a method for selecting multiple electronic files, that can be applied on portable electronic devices. The method comprises : selecting an electronic file from an electronic menu; verifying whether a 'select all', 'partial', or 'single' selection option is selected; selecting every or a portion of the electronic files thereof from the electronic menu; and editing every selected electronic file thereof.

## Description

### BACKGROUND OF THE INVENTION

### 1. Field of the Invention

The present invention relates to a method for selecting multiple electronic files and, more particularly, to which a method for selecting multiple electronic files that can be applied on a portable electronic device.

### 2. Description of Related Art

Speaking of general non-portable electronic devices, such as a desktop personal computer, the associated keyboard combined with a mouse provide a wide range of control buttons and movements, thereby making any selection of multiple electronic files (including all or partial selection) from an electronic menu relatively effortless control-wise with proper uses of control buttons.

However, layouts of conventional portable electronic products, which are equipped with a small number of control buttons, are typically designed to offer one sole function comparing to products with built-in Windows software or touch screen devices that are convenient to operate on in terms of the selecting function overall; these types of portable devices, on the other hand, are limited to single file selection due to minimal numbers of control buttons constrained on such small-sized devices.

### SUMMARY OF THE INVENTION

To prevent failure to operate multiple electronic files selection due to limited control buttons on conventional electronic devices, the present invention discloses a method for selecting multiple electronic files, which can be applied on portable electronic devices, comprising steps as follows: (A) selecting an electronic file from an electronic menu; (B) verifying whether a 'select all' option is selected; (C) selecting every electronic file thereof from the electronic menu; and (D) editing every selected electronic file thereof.

Another method for selecting multiple electronic files that can be applied on a portable electronic device comprises steps as follows: (A) selecting an electronic file from an electronic menu as a starting point; (B) verifying whether a partial selection option is selected; (C) selecting an electronic file from the electronic menu as an ending point; (D) selecting electronic files listed in between said starting and said ending point of the electronic files; and (E) editing said selected electronic files.

Yet another method for selecting multiple electronic files that can be applied on portable devices comprises steps as follows: (A) selecting an electronic file from an electronic menu as a starting point; (B) verifying whether a multiple single-file selection option is selected; (C) selecting electronic files requested from the electronic menu; and (D) editing the selected electronic files thereof.

According to what have been mentioned above, the present invention relates to a method for selecting multiple electronic files, in which the selection of multiple electronic files can be conveniently operated by users, given the constraint to minimal control buttons on small-sized devices.

Additionally, the abovementioned editing includes cutting, copying, and pasting every said electronic file; it further includes canceling the selection of at least one electronic file after a selection has been made. The portable electronic device can be an MP3 player.

### BRIEF DESCRIPTION OF THE DRAWINGS

FIG. 1 is a drawing of a portable electronic device for illustrating a preferred embodiment of the present invention.
FIG 2 is a flow chart of the method for selecting all electronic files according to the preferred embodiment of the present invention.
FIG. 3 is a flow chart of the method for selecting partial electronic files according to the preferred embodiment of the present invention.
FIG. 4 is a flow chart of the method for selecting multiple electronic files according to the preferred embodiment of the present invention.
FIG. 5 is a drawing of a portable electronic device for illustrating the first example of the preferred embodiment of the present invention.

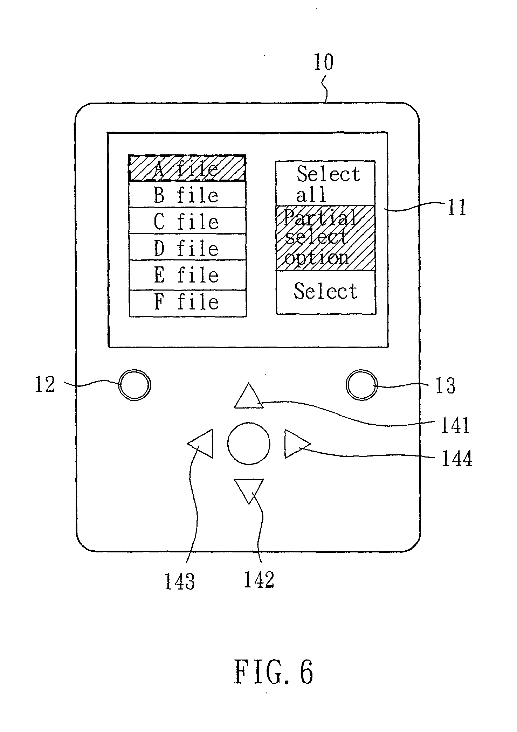

FIG 6 is a drawing of a portable electronic device for illustrating the second example of the preferred embodiment of the present invention.
FIG. 7 is another drawing of a portable electronic device for illustrating the second example of the preferred embodiment of the present invention.
FIG. 8 is a drawing of a portable electronic device for illustrating the third example of the preferred embodiment of the present invention.

### DETAILED DESCRIPTION OF THE PREFERRED EMBODIMENT

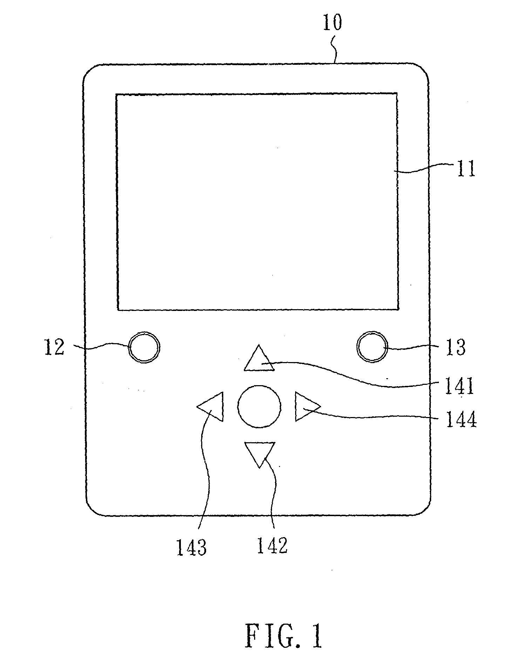

Multiple electronic files selection includes selections of all and a part of electronic files; therefore, for the better understanding of the content of the present invention, three examples in the preferred embodiment are set forth below to describe respectively an all selection, a partial selection, and a multiple single selection of electronic files while referring to FIG. 1, in which it illustrates a portable electronic device that executes the method for selecting multiple electronic files according to the present invention.

### First Example:

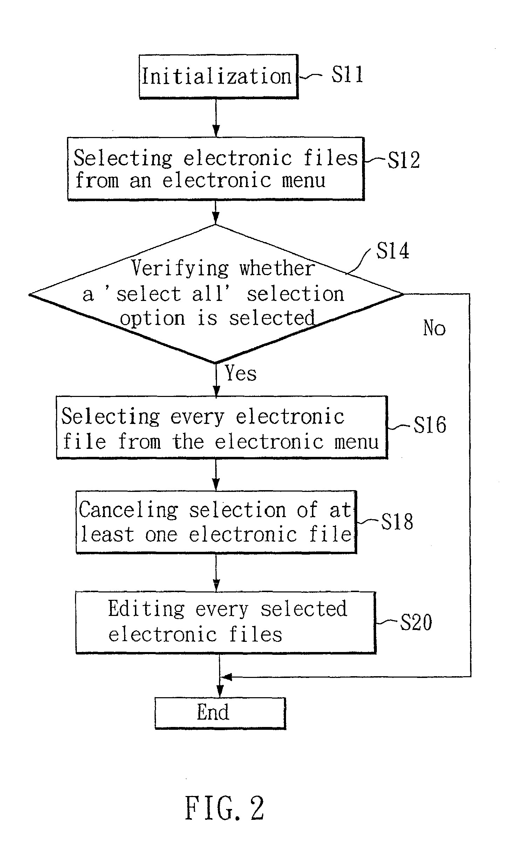

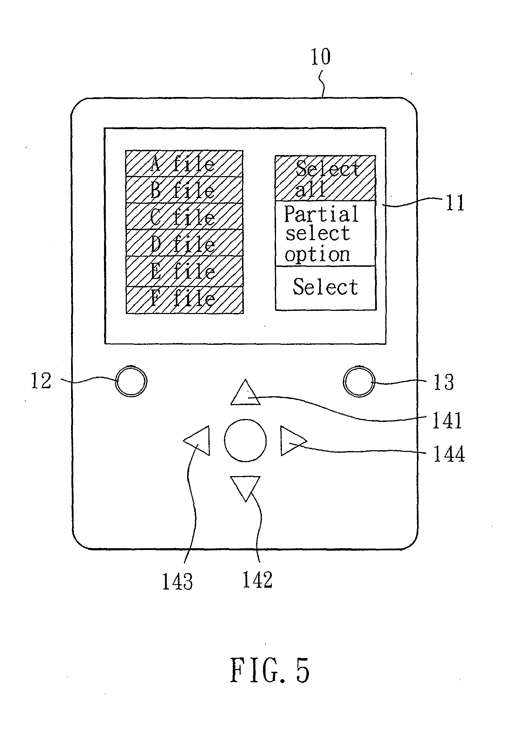

As FIG2 shown, the present invention, which is utilized to select all electronic files from one specified electronic menu, comprises following steps:
Step S 11: Initialization.
Step S 12: selecting electronic files from an electronic menu, in which the electronic files from the electronic menu are shown on a display **11** of a portable electronic device **10;** for instance, by pressing a control button **13,** a 'select all' or a 'partial' selection option will be displayed for users to choose from.
Step S14: verifying whether a 'select all' selection option is selected. Since the 'select all' option implies selecting every electronic file from the electronic menu, users may employ such option according to their preferences at appropriate time. Referring to FIG. 5, for example, if a 'select all' option is to be selected, the user shall first use 'Up' button **141** or 'Down' button **142** to move to the 'select all' option and then press 'Right/Enter' button **144** for confirmation; if not, pressing 'Left/Back' button 143 will exit the current display accordingly.
Step S16: Selecting every electronic file from the electronic menu following the abovementioned step S 14.
Step S 18: Canceling selection of at least one electronic file. At this moment all files have been selected in the previous steps; if a small number of electronic files are to be cancelled from the current selection, the control button 13 shall be pressed first to move to 'undo selection' option. The user then could use 'Up' button **141** or 'Down' button **142** to move to files that are intended to be cancelled and press 'Right/Enter' button **144** to cancel selection of those few electronic files.
Step 20: Editing every selected electronic file. After the user goes through previous steps as mentioned above, the user can then assign commands such as copying, pasting, deleting, cutting, or playing these selected files by pressing the control button **13.**

### Second Example:

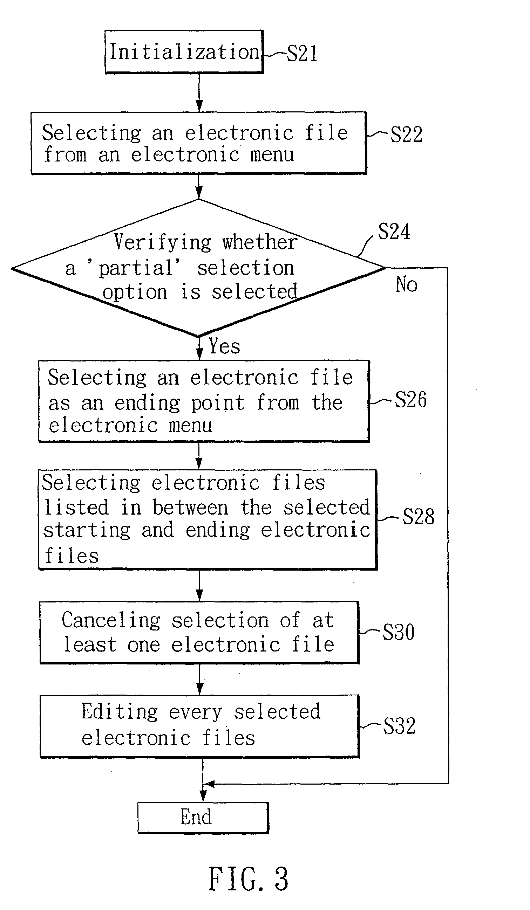

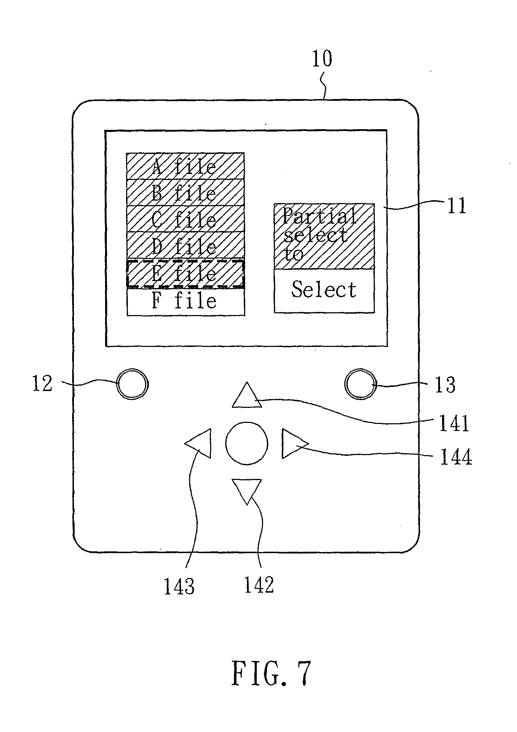

As FIG. 3 shown, the present invention, which is utilized to select multiple electronic files, namely a portion of the electronic files in this instance, from one specified electronic menu, comprises following steps:
Step S21: Initialization.
Step 22: selecting an electronic file from an electronic menu as a starting point, in which the electronic files from said electronic menu are displayed on a display **11** of a portable electronic device **10;** referring to FIG. 5, for example, by pressing the control button **13** a 'select all' option or a starting point of a 'partial' selection option will be displayed for users to choose from. If the starting point of a partial selection is selected, the user shall first use 'Up' button **141** or 'Down' button **142** to move to the desired electronic file from the electronic menu as the starting point of the partial selection and then press 'Right/Enter' button **144** for confirmation.
Step S24: verifying whether a 'partial' selection option is selected. Since a 'partial' selection implies selecting merely a portion of the electronic files from the electronic menu, users may employ such option according to their preferences at appropriate time. For example, if a 'partial' selection is to be selected, the user shall first use 'Up' button **141** or 'Down' button **142** to move to the desired electronic file from the electronic menu as the starting point of the partial selection and then press 'Right/Enter' button **144** for confirmation; if not, pressing 'Left/Back' button **143** will exit the current display accordingly.
Step S26: selecting an electronic file as an ending point from the electronic menu. The 'partial' selection implies selecting a portion of the electronic files from the electronic menu; referring to FIG. 7, for example, the cursor is moved to the desired electronic file from the electronic menu as the ending point of the partial selection by using 'Up' button **141** or 'Down' button **142.**
Step S28: selecting electronic files listed in between the selected starting electronic file the ending electronic file. Referring to FIG. 7, for example, following the step S26 in which the cursor has been moved to the ending point, 'Right/Enter' button 144 shall be pressed such that the content of the partial selection can be confirmed.
Step S30: canceling selection of at least one electronic file. If the user wishes to delete a small number of electronic files once the content of the partial selection has been confirmed, the user can first press the control button **13** to select 'undo selection' option, then move to files that are intended to be deleted by using 'Up' button **141** or 'Down' button **142** and finally press 'Right/Enter' button **144** to confirm, thus concluding the procedure of canceling a small number of selected electronic files.
Step 32: Editing every selected electronic file. After the user have gone through previous steps as mentioned above, the user can then assign commands such as copying, pasting, deleting, cutting, or playing these selected files by pressing the control button **13.**

### Third Example:

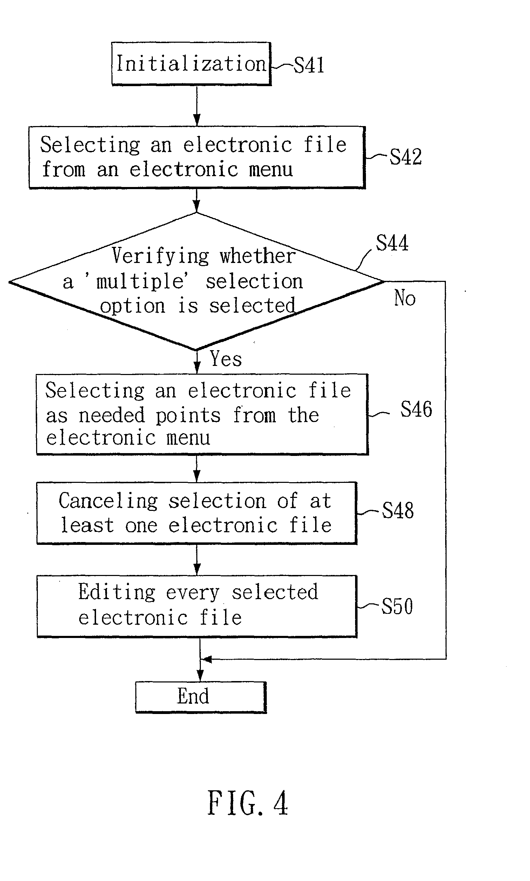

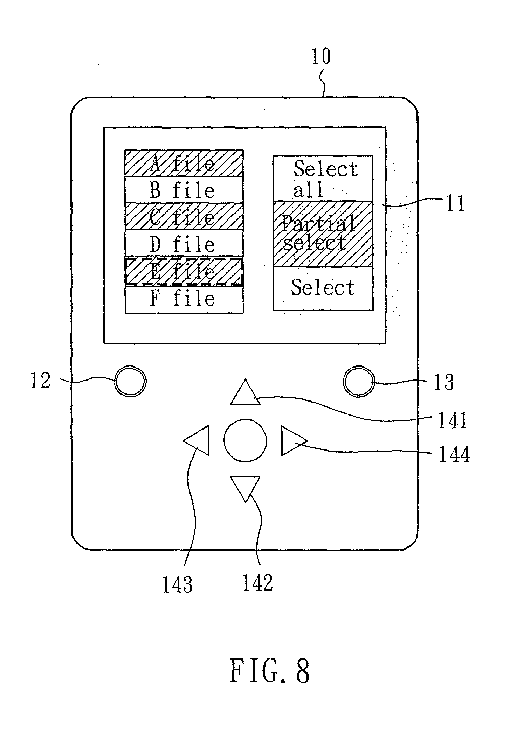

Please refer to FIG. 4 and FIG. 8 which illustrate the third example of the preferred embodiment, in which the majority of the operational procedures share with the ones mentioned in the previous two examples of the preferred embodiment, except each file has to be selected individually according to the users' preferences. For example, as shown in FIG. 8, assuming files A, C, and E are the files required by the user, the cursor shall first be moved to file A by using 'UP' button **141** or 'Down button' **142.** File A is selected once the 'Right/Enter' button 144 is pressed; repeating the same procedure to select the remaining file C and E shall completes the method of selecting multiple single files as illustrated in FIG 8.

Although the present invention has been explained in relation to its preferred embodiment, it is to be understood that many other possible modifications and variations can be made without departing from the scope of the invention as hereinafter claimed.

## Claims

1. A method for selecting multiple electronic files, which can be applied on a portable electronic device, comprising the steps of:
(A) selecting an electronic file from an electronic menu;
(B) verifying whether a 'select all' option is selected;
(C) selecting said every electronic file from said electronic menu; and
(D) editing said every selected electronic file.

2. The method for selecting multiple electronic files as claimed in claim 1, wherein said editing comprises cutting, copying, pasting, and playing every said electronic file.

3. The method for selecting multiple electronic files as claimed in claim 1, wherein step (C) further comprises: canceling selection of said electronic file.

4. The method for selecting multiple electronic files as claimed in claim 1, wherein said portable electronic device is an MP3 player.

5. The method for selecting multiple electronic files as claimed in claim 1, wherein, as a control button of said portable electronic device is pressed, said portable electronic device provides said 'select all' option.

6. A method for selecting multiple electronic files, which can be applied on a portable electronic device, comprising the steps of:
(A) selecting an electronic file from an electronic menu as a starting point;
(B) verifying whether a partial selection option is selected;
(C) selecting an electronic file from said electronic menu as an ending point;
(D) selecting electronic files listed in between said starting and said ending point of said electronic files; and
(E) editing said selected electronic files.

7. The method for selecting multiple electronic files as claimed in claim 6, wherein said editing comprises cutting, copying, pasting, and playing every said electronic file.

8. The method for selecting multiple electronic files as claimed in claim 6, wherein step (D) further comprises: canceling selection of said electronic files.

9. The method for selecting multiple electronic files as claimed in claim 6, wherein said portable electronic device is an MP3 player.

10. The method for selecting multiple electronic files as claimed in claim 6, wherein, as a control button on said portable electronic device is pressed, said portable electronic device provides said partial selection option.

11. A method for selecting multiple electronic files, which can be applied on a portable electronic device, comprising the steps of:
(A) selecting an electronic file from an electronic menu as a starting point;
(B) verifying whether a multiple single-selection option is selected;
(C) selecting electronic files requested from said electronic menu; and
(D) editing said selected electronic files.

12. The method for selecting multiple electronic files as claimed in claim 11, wherein said editing comprises cutting, copying, pasting, and playing every said electronic file.

13. The method for selecting multiple electronic files as claimed in claim 11, wherein step (C) further comprises: canceling selection of said electronic files.

14. The method for selecting multiple electronic files as claimed in claim 11, wherein said portable electronic device is an MP3 player.

15. The method for selecting multiple electronic files as claimed in claim 6, wherein, as a control button on said portable electronic device is pressed, said portable electronic device provides said multiple single files selection option.
